# EUROPÄISCHE PATENTSCHRIFT

(11) **EP 2 834 095 B1**
(45) Veröffentlichungstag und Bekanntmachung des Hinweises auf die Patenterteilung: **19.10.2016**
(21) Anmeldenummer: 14708252.3
(22) Anmeldetag: 06.03.2014
(51) Int. Cl.: B60J 10/18, B60J 10/20, B60J 10/34, B60J 10/70, B60J 10/00

(54) **PROFILELEMENT ZUM VERBINDEN EINER FAHRZEUGSCHEIBE MIT EINEM ABDECKTEIL UND PROFILELEMENTBAUGRUPPE**
PROFILE ELEMENT FOR CONNECTING A VEHICLE DISC TO A COVER PART AND PROFILE ELEMENT ASSEMBLY
ÉLÉMENT PROFILÉ SERVANT À RELIER UNE VITRE DE VÉHICULE À UN ÉLÉMENT DE RECOUVREMENT ET ENSEMBLE ÉLÉMENT PROFILÉ

(30) Priorität: 19.03.2013 DE 102013204820
(43) Veröffentlichungstag der Anmeldung: 11.02.2015
(73) Patentinhaber: Elkamet Kunststofftechnik GmbH, 35216 Biedenkopf (DE)
(72) Erfinder: ORTMUELLER, Michael, 35232 Dautphetal-Herzhausen (DE)
(74) Vertreter: DREISS Patentanwälte PartG mbB
(86) Internationale Anmeldenummer: PCT/EP2014/054294
(87) Internationale Veröffentlichungsnummer: WO 2014/146902

(56) Entgegenhaltungen:
- WO-A1-2012/089309
- DE-U1-202008 006 986
- DE-U1-202008 009 712

## Beschreibung

Die Erfindung betrifft ein Profilelement mit den Merkmalen des Oberbegriffs des Patentanspruchs 1, gemäß DE 20 2008 009 712 U1.

Ein aus der DE 20 2008 006 986 U1 bekanntes Profilelement wird zunächst mit einer Fahrzeugscheibe verbunden, bevor die Fahrzeugscheibe mit angeschlossenem Profilelement an einem Fahrzeug montiert wird. Anschließend wird ein Abdeckteil montiert, bei welchem es sich beispielsweise um eine Wasserkastenabdeckung handelt, die mit dem Profilelement verrastet wird. Eine Wasserkastenabdeckung dient zur Abdeckung eines Wasserkastens, der von der Fahrzeugscheibe abfließendes Wasser aufnimmt und nach außen ableitet. Der Wasserkasten kann Bestandteil der Fahrzeugkarosserie sein.

Die Verrastung einer Wasserkastenabdeckung mit dem Profilelement erfolgt üblicherweise über die gesamte Profillänge. Daher ist es für eine Verrastung der Wasserkastenabdeckung erforderlich, die Wasserkastenabdeckung während der Montage relativ exakt zu dem Profilelement-auszurichten. Dies ist aus Bauraumgründen nicht immer möglich, beispielsweise wenn Aggregate im Motorraum mit der Wasserkastenabdeckung kollidieren und eine optimale Ausrichtung verhindern. Daher wird ein Monteur geneigt sein, auch höhere Montagekräfte aufzubringen, um eine Montage der Wasserkastenabdeckung auch aus einer nicht optimalen Position und/oder Ausrichtung heraus durchführen zu können.

Es hat sich herausgestellt, dass erhöhte Montagekräfte zumindest vereinzelt zu einer Zerstörung des Profilelements und/oder zu einem Ablösen des Profilelements von der Fahrzeugscheibe führen können, insbesondere dann, wenn das Profilelement nicht durch einen karosserieseitigen Unterzug nach unten hin abgestützt ist.

Hiervon ausgehend liegt der vorliegenden Erfindung die Aufgabe zugrunde, ein Profilelement bereitzustellen, mit welchem die Montage des Abdeckteils an dem Profilelement vereinfacht wird.

Diese Aufgabe wird erfindungsgemäß durch die kennzeichnenden Merkmale des Patentanspruchs 1 gelöst.

Erfindungsgemäß weist der Dichtbereich zwei voneinander separate Teilabschnitte auf, welche relativ zueinander bewegbar sind. Die Relativbewegbarkeit der Teilabschnitte ermöglicht ein Ausweichen zumindest eines Teilabschnitts des Dichtbereichs während der Montage des Abdeckteils (insbesondere der Wasserkastenabdeckung), sodass während der Montage mit dem Dichtbereich kollidierende Abdeckteilabschnitte frei positioniert werden können. Es wird also ein zusätzlicher Bewegungsraum für das Abdeckteil bereitgestellt, indem die Teilabschnitte des Dichtbereichs relativ zueinander bewegbar sind.

Die Relativbewegbarkeit der Teilabschnitte hat den Vorteil, dass auch bei ungünstiger Einbaulage des Abdeckteils die Montagekräfte reduziert werden können und gleichzeitig das Risiko einer Beschädigung oder einer Zerstörung des Profilelements verringert wird. Diese Vorteile ergeben sich insbesondere für den Fall, dass im Rahmen der Montage eines Abdeckteils der Bereich des Abdeckteils, der zur Anlage an die zweite Dichtfläche des Profilelements bestimmt ist, aufgrund einer nicht optimalen Ausrichtung des Abdeckteils auf dem Dichtbereich des Profilelements aufsitzt, und zwar bevor das Profilelement und das Abdeckteil mittels entsprechender Rastpartner miteinander verrastet sind.

Wenn, wie eingangs erwähnt, ein Monteur höhere Montagekräfte aufbringt, um eine Montage beispielsweise einer Wasserkastenabdeckung auch aus einer nicht optimalen Position heraus zu erzwingen, kann dies dazu führen, dass sich das Profilelement aus einer Normallage heraus verformt und um die Profilelement-Längsrichtung kippt. Hierdurch vergrößert sich eine relative Fehlausrichtung des Profilelements und der Wasserkastenabdeckung, wodurch eine Verrastung der Rastpartner weiter erschwert oder sogar ganz verhindert wird. Im Rahmen der Erfindung ist es nun möglich, eine Wasserkastenabdeckung trotz einer solchen Fehlausrichtung mit dem Profilelement zu verrasten und gleichzeitig eine damit einhergehende Erhöhung der Montagekräfte und eine dadurch bewirkte Vergrößerung der relativen Fehlausrichtung des Profilelements und der Wasserkastenabdeckung zu vermeiden.

Für einen besonders einfach aufgebauten Dichtbereich ist es bevorzugt, dass die Teilabschnitte miteinander einstückig hergestellt sind.

Bevorzugt ist es ferner, wenn die Teilabschnitte mittels eines im Querschnitt verjüngten Verbindungsabschnitts miteinander verbunden sind. Dies ermöglicht eine Relativverschwenkbarkeit der Teilabschnitte um den verjüngten Verbindungsabschnitt.

Erfindungsgemäß weist der Dichtbereich einen Freiraum auf, in welchen zumindest einer der Teilabschnitte hineinverformbar ist. Auf diese Weise können die für eine Relativbewegung der Teilabschnitte erforderlichen Kräfte bei der Montage des Abdeckteils verringert werden.

Erfindungsgemäß ist der Freiraum durch eine umfangsseitig offene Nut begrenzt, wodurch eine vergleichsweise einfache Herstellung eines Profilelements ermöglicht wird.

Erfindungsgemäß ist die Nut ausgehend von einem Nutgrund in einer von der Außenfläche weg weisenden Richtung offen.

Vorzugsweise ist der Dichtbereich aus mindestens einem federelastischen Material hergestellt, sodass die Teilabschnitte von einem entspannten Ausgangszustand ausgehend durch Krafteinwirkung von außen relativ zueinander in einen Zwischenzustand überführbar sind, und von dem Zwischenzustand ausgehend durch Wirken von Rückstellkräften des federelastischen Materials selbsttätig in Richtung Ausgangszustand zurückformbar sind. Die Rückstellkräfte des federelastischen Materials unterstützen die dichtende Anlage der Dichtflächen, insbesondere der zweiten Dichtfläche an einer Gegenfläche des Abdeckteils.

Bevorzugte Materialien für den Dichtbereich sind Elastomere, thermoplastische Elastomere, geschäumte thermoplastische Elastomere und Moosgummi.

Der erfindungsgemäße Dichtbereich eignet sich besonders gut für Profilelemente, bei welchen der zweite Verbindungsbereich einen Rastbereich zur Aufnahme eines Rastkörpers des Abdeckteils aufweist, wobei innerhalb des Rastbereichs ein Rastelement angeordnet ist, das zur Verrastung des Rastkörpers in dem Rastbereich dient, wobei das Rastelement sich entlang einer Rastelementebene erstreckt, die in einem spitzen Winkel zu einer Einführebene zur Einführung des Rastkörpers in den Rastbereich orientiert ist, sodass das Rastelement einen Widerhaken bildet. Das widerhakenförmige Rastelement wird beim Einführen des Rastkörpers in den Rastbereich (also bei der Montage des Abdeckteils) nur geringfügig verformt (d.h. zur Seite gedrückt oder gebogen). Beim Ausführen des Rastkörpers aus dem Rastbereich (also bei einer Demontage des Abdeckteils) wird das widerhakenförmige Rastelement gestaucht und somit in einem stärkeren Maße verformt als während der Montage des Abdeckteils. Eine solche Verrastung ist bspw. aus der DE 20 2008 006 986 U1 derselben Anmelderin bekannt. Hinsichtlich des Aufbaus und der Funktionsweise des in der genannten Druckschrift beschriebenen Profilelements wird hiermit auch auf den Inhalt der genannten Druckschrift Bezug genommen.

Der Dichtbereich weist eine Außenfläche auf, welche im montierten Zustand des Profilelements bündig oder zumindest im Wesentlichen bündig mit einer Außenseite der Fahrzeugscheibe und mit einer Außenseite des Abdeckteils angeordnet ist, sodass eine insgesamt zumindest im Wesentlichen durchgängige Fahrzeugaußenfläche geschaffen werden kann. Erfindungsgemäß sind die Teilabschnitte auf der der Außenfläche abgewandten Seite des Dichtbereichs angeordnet.

Die Erfindung betrifft ferner eine Profilelementbaugruppe, welche ein vorstehend beschriebenes Profilelement umfasst, das mittels des ersten Verbindungsbereichs mit einer Fahrzeugscheibe verbunden ist, wobei der erste Teilabschnitt des Dichtbereichs mit der ersten Dichtfläche an einer Stirnfläche der Fahrzeugscheibe anliegt und wobei der zweite Teilabschnitt des Dichtbereichs relativ zu dem ersten Teilabschnitt bewegbar ist.

Vorteile und Ausgestaltungen der erfindungsgemäßen Profilelementbaugruppe wurden bereits vorstehend unter Bezugnahme auf das erfindungsgemäße Profilelement beschrieben. Auf diese Beschreibung wird hiermit Bezug genommen.

Weitere Vorteile und Ausgestaltungen des erfindungsgemäßen Profilelements und der erfindungsgemäßen Profilelementbaugruppe sowie weitere Merkmale der Erfindung sind Gegenstand der nachfolgenden Beschreibung und der zeichnerischen Darstellung bevorzugter Ausführungsformen.

In der Zeichnung zeigen:
Fig. 1 eine Seitenansicht einer Ausführungsform einer Profilelementbaugruppe in einem Montagezustand;
Fig. 2 eine Seitenansicht der Profilelementbaugruppe gemäß Fig. 1 in einem fertig montierten Zustand;
Fig. 3 eine Seitenansicht einer weiteren Ausführungsform einer Profilelementbaugruppe;
Fig. 4 eine Seitenansicht einer weiteren Ausführungsform einer Profilelementbaugruppe mit einem aus einem Moosgummimaterial hergestellten Dichtbereich;
Fig. 5 eine Seitenansicht einer weiteren Ausführungsform eines Teils einer Profilelementbaugruppe mit einem Dichtbereich, der einen Freiraum mit Hinterschnitt aufweist;
Fig. 6 eine Seitenansicht einer weiteren Ausführungsform eines Teils einer Profilelementbaugruppe mit einem im Querschnitt flachen Dichtbereich;
Fig. 7 und 8 Seitenansichten nicht erfindungsgemäßer Ausführungsformen eines Teils einer Profilelementbaugruppe mit einem Dichtbereich, der einen Freiraum mit einem umfangsseitig geschlossenen Hohlraum aufweist; und
Fig. 9 bis 11 Seitenansichten weiterer Ausführungsformen einer Profilelementbaugruppe bzw. eines Teils einer Profilelementbaugruppe mit einem im Hinblick auf eine vereinfachte Montage modifizierten Abdeckteil, wobei die Ausführungsform gemäß Fig. 11 nicht erfindungsgemäß ist.

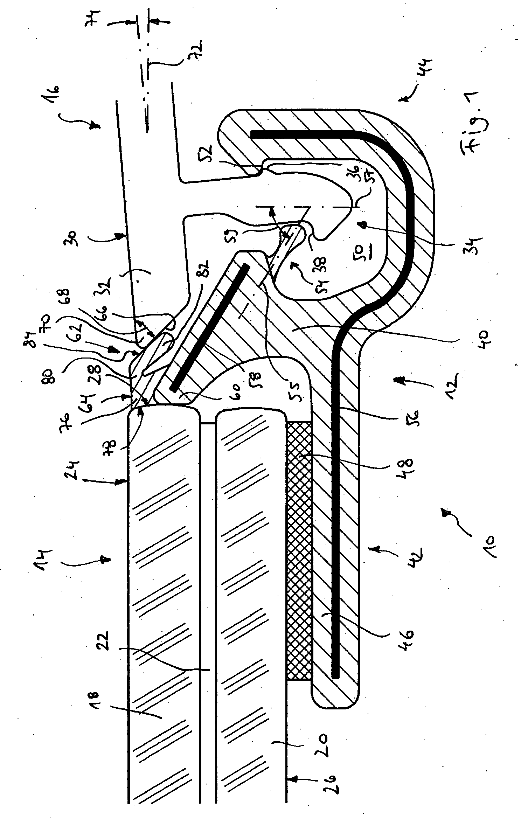

Eine Ausführungsform einer Profilelementbaugruppe ist in Figur 1 insgesamt mit dem Bezugszeichen 10 bezeichnet. Die Baugruppe 10 umfasst ein Profilelement 12 sowie eine nur abschnittsweise dargestellte Fahrzeugscheibe 14 (insbesondere eine Frontscheibe eines Kraftfahrzeugs) und ein nur abschnittsweise dargestelltes Abdeckteil 16, das insbesondere als Wasserkastenabdeckung ausgebildet ist. Nachfolgend wird das Abdeckteil 16 daher als Wasserkastenabdeckung 16 bezeichnet.

Die Fahrzeugscheibe 14 ist in vorteilhafter Weise eine Verbundkonstruktion mit zueinander parallelen Scheibenschichten 18 und 20, welche mittels einer Verbindungsschicht 22 miteinander verbunden sind. Die Fahrzeugscheibe 14 weist eine Außenseite 24, eine Innenseite 26 und eine sich entlang der Berandung der Fahrzeugscheibe 14 zwischen der Außenseite 24 und der Innenseite 26 erstreckende Stirnfläche 28 auf.

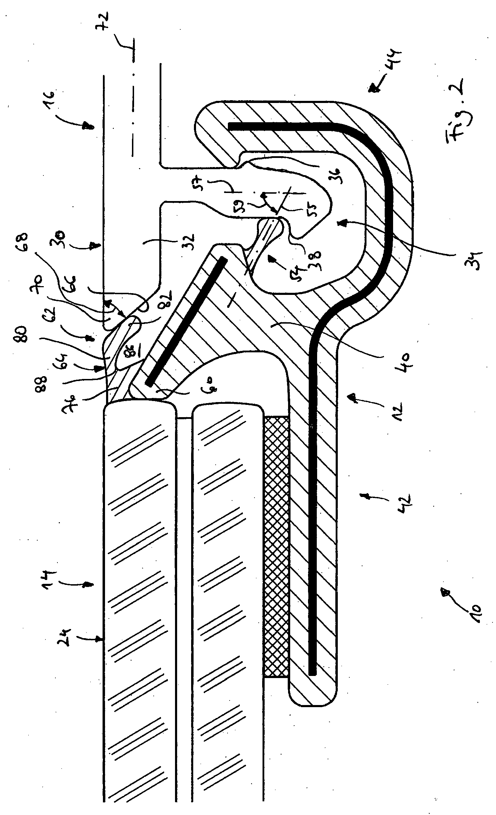

Die Wasserkastenabdeckung 16 weist eine Außenseite 30 auf, welche im montierten Zustand der Wasserkastenabdeckung 16 (vgl. Figur 2) zumindest im Wesentlichen auf derselben Höhe wie die Außenseite 24 der Fahrzeugscheibe 14 angeordnet ist. Die Außenseite 30 ist gebildet von einem Wasserkastenabschnitt 32, bei welchem es sich um ein sogenanntes Windleitelement oder einen Windlaufgrill handeln kann.

Im fertig montierten Zustand der Wasserkastenabdeckung 16 sind der Wasserkastenabschnitt 32 und die Fahrzeugscheibe 14 im Wesentlichen miteinander fluchtend angeordnet. Von dem Wasserkastenabschnitt 32 ausgehend ragt ein Rastkörper 34 ab, der insbesondere in Form eines Rastarms ausgebildet ist. Der Rastkörper 34 erstreckt sich vorzugsweise entlang der gesamten Länge der Wasserkastenabdeckung 16 (im an dem Kraftfahrzeug montierten Zustand der Wasserkastenabdeckung 16 also im Wesentlichen über die Breite der Fahrzeugscheibe 14, d.h. in Fahrzeugquerrichtung).

Der Rastkörper 34 weist eine erste Rastfläche 36 und eine zweite Rastfläche 38 auf. Die Rastflächen 36 und 38 sind auf voneinander abgewandten Seiten des Rastkörpers 34 angeordnet.

Das Profilelement 12 weist einen Hauptkörper 40 auf, von welchem ausgehend sich ein erster Verbindungsbereich 42 zur Verbindung des Profilelements 12 mit der Fahrzeugscheibe 14 und ein zweiter Verbindungsbereich 44 zur Verbindung des Profilelements 12 mit der Wasserkastenabdeckung 16 erstreckt.

Der erste Verbindungsbereich 42 umfasst bspw. einen zu der Fahrzeugscheibe 14 parallelen Trägerabschnitt 46 zum Tragen einer Klebeschicht 48 zur klebenden Verbindung des Trägerabschnitts 46 mit der Unterseite 26 der Fahrzeugscheibe 14.

Der zweite Verbindungsbereich 44 umfasst einen Rastbereich 50, welcher vorzugsweise im Querschnitt im Wesentlichen U-förmig, L-förmig oder hakenförmig ist und zur Aufnahme des Rastkörpers 34 der Wasserkastenabdeckung 16 dient.

Der zweite Verbindungsbereich 44 weist eine Rastkante 52 auf, welche mit der ersten Rastfläche 36 des Rastkörpers 34 der Wasserkastenabdeckung 16 zusammenwirkt.

Auf der der Rastkante 52 gegenüberliegende Seite ist in dem Rastbereich 50 ein Rastelement 54 angeordnet, welches mit der zweiten Rastfläche 38 des Rastkörpers 34 der Wasserkastenabdeckung 16 zusammenwirkt. Hinsichtlich des Aufbaus und der Funktionsweise des Rastelements 54 wird auch auf den Inhalt der Druckschrift DE 20 2008 006 986 U1 derselben Anmelderin Bezug genommen. Das Rastelement 54 erstreckt sich entlang einer Rastelementebene 55, die zu einer Einführebene 57 des Rastkörpers 34 der Wasserkastenabdeckung 16 in einem spitzen Winkel 59 orientiert ist. Der Winkel 59 beträgt vorzugsweise zwischen ca. 20° und ca. 70°, insbesondere zwischen ca. 30° und ca. 60°.

Das Profilelement 12 ist vorzugsweise aus einem elastischen Material hergestellt, das mittels metallischer Einlagen 56, 58, beispielsweise aus Aluminium, mechanisch verstärkt ist.

Das Profilelement 12 umfasst ferner einen sich von dem Hauptkörper 40 aus erstreckenden Trägerabschnitt 60 zum Tragen eines Dichtbereichs 62. Der Dichtbereich 62 weist eine Außenfläche 64 auf, welche im montierten Zustand der Wasserkastenabdeckung 16 (vgl. Figur 2) zumindest im Wesentlichen parallel und bündig zu der Außenseite 24 der Fahrzeugscheibe 14 und zu der Außenseite 30 der Wasserkastenabdeckung 16 verläuft.

Der Dichtbereich 62 erstreckt sich zwischen der Stirnfläche 28 der Fahrzeugscheibe 14 und einer Gegenfläche 66 der Wasserkastenabdeckung 16. Die Gegenfläche 66 ist durch eine Stirnfläche des Wasserkastenabschnitts 32 gebildet. Vorzugsweise ist die Gegenfläche 66 bezogen auf eine zu der Außenseite 30 des Wasserkastenabschnitts senkrechte Richtung geneigt, sodass die Gegenfläche 66 und die Außenseite 30 zwischen sich einen Winkel 68 von ca. 10° bis 85°, vorzugsweise von ca. 30° bis ca. 70°, insbesondere von ca. 40° bis ca. 60° einschließen. Die Gegenfläche 66 und die Außenseite 30 münden an einer Montagekante 70.

Wenn der Wasserkastenabschnitt 32 bezogen auf eine zu der Fahrzeugscheibe 14 parallele Lage 72 um einen Neigungswinkel 74. nach außen geneigt ausgerichtet ist, geht die Einführung des Rastkörpers 34 der Wasserkastenabdeckung 16 in den Rastbereich 50 des Profilelements 12 mit eine Kollision der Montagekante 70 und des Dichtbereichs 62 einher.

Der Dichtbereich 62 weist einen ersten Teilabschnitt 76 auf, welcher mit einer ersten Dichtfläche 78 an der Stirnfläche 28 der Fahrzeugscheibe 14 dichtend anliegt.

Der erste Teilabschnitt 76 ist mittels eines im Querschnitt verjüngten Verbindungsabschnitts 80 mit einem zweiten Teilabschnitt 82 verbunden, welcher eine zweite Dichtfläche 84 zur dichtenden Anlage gegen die Gegenfläche 66 der Wasserkastenabdeckung 16 aufweist. Der zweite Teilabschnitt 82 ist um den Verbindungsabschnitt 80 herum relativ zu dem ersten Teilabschnitt 76 verschwenkbar.

In Figur 1 ist der zweite Teilabschnitt 82 in einem durch Aufdrücken der Montagekante 70 verformten Zustand dargestellt, bei welchem der zweite Teilabschnitt in einen zwischen den Teilabschnitten 76 und 82 ausgebildeten Freiraum 86 (vgl. Figur 2) eintaucht.

Bei dem in den Figuren 1 und 2 dargestellten Ausführungsbeispiel ist der Freiraum 86 durch eine umfangsseitig offene Nut 88 begrenzt.

Der Dichtbereich 62 ist aus einem federelastischen Material, bspw. aus einem thermoplastischen Elastomer, hergestellt. Nach vollständiger Verrastung des Rastkörpers 34 der Wasserkastenabdeckung 16 sowohl mit der Rastkante 52 als auch mit dem Rastelement 54 bewirken die Rückstellkräfte des federelastischen Materials des Dichtbereichs 62 eine Rückverformung des zweiten Teilabschnitts 82 aus dem Freiraum 86 heraus in Richtung auf die Gegenfläche 66, sodass die zweite Dichtfläche 84 und die Gegenfläche 66 der Wasserkastenabdeckung 16 dichtend aneinander anliegen.

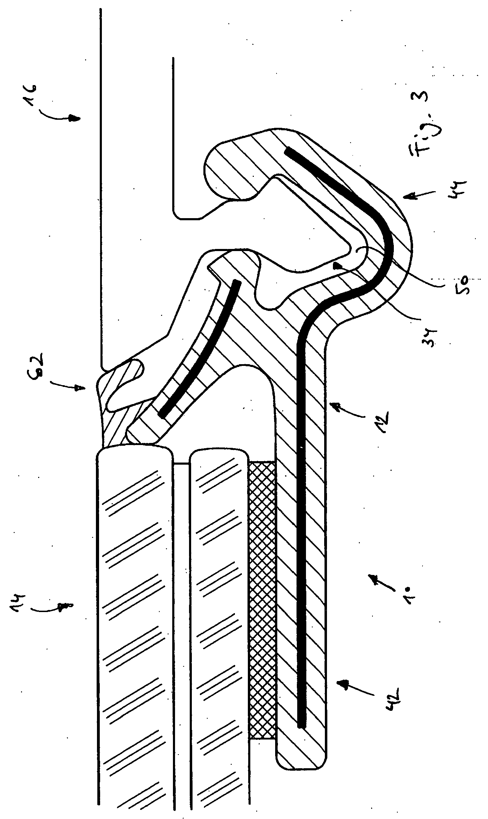

Die vorteilhaften Wirkungen des erfindungsgemäßen Dichtbereichs 62 ergeben sich insbesondere bei einem zweiten Verbindungsbereich 44 mit einem Rastbereich 50, der ein Rastelement 54 aufweist, wie vorstehend unter Bezugnahme auf Figuren 1 und 2 beschrieben. Die Vorteile des Dichtbereichs 62 ergeben sich aber auch, wenn der zweite Verbindungsbereich 44 kein Rastelement 54 aufweist, wie dies beispielhaft in Figur 3 dargestellt ist.

Der Hauptkörper 40 mit den Verbindungsbereichen 42 und 44 des Profilelements 12 sowie der Trägerabschnitt 60 für den Dichtbereich 62 sind vorzugsweise aus demselben Material hergestellt, beispielsweise aus einem Blend aus Acrylnitril-Butadien-Styrol-Copolymer und Polyvinylchlorid (ABS/PVC) oder aus Polypropylen (PP) oder anderen thermoplastisch verarbeitbaren Kunststoffen. Das Material des Dichtbereichs 62 und eines ggf. vorhandenen Rastelements 54 kann ein anderes Material sein, bspw. ein thermoplastisches Elastomer (TPE). Der Dichtbereich 62 und das ggf. vorhandene Rastelement 54 werden vorzugsweise gemeinsam mit dem Hauptkörper 40, den Verbindungsbereichen 42 und 44 und dem Trägerabschnitt 60 mittels eines (Co-)Extrusionsverfahrens hergestellt.

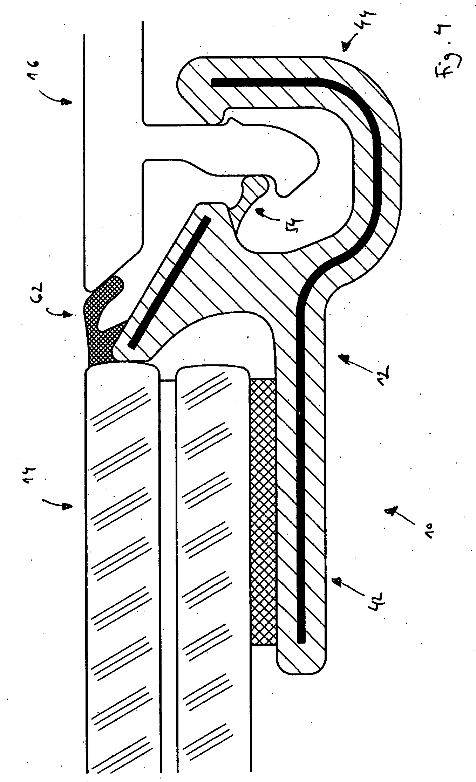

Es ist möglich, dass der Dichtbereich 62 und das ggf. vorhandene Rastelement 54 aus einem thermoplastischen Elastomer hergestellt sind. Es ist auch denkbar, den Dichtbereich 62 aus einem Moosgummimaterial oder einem geschäumten TPE herzustellen, welches besonders weich und besonders leicht verformbar ist. Ein solcher Dichtbereich 62 ist in Figur 4 dargestellt.

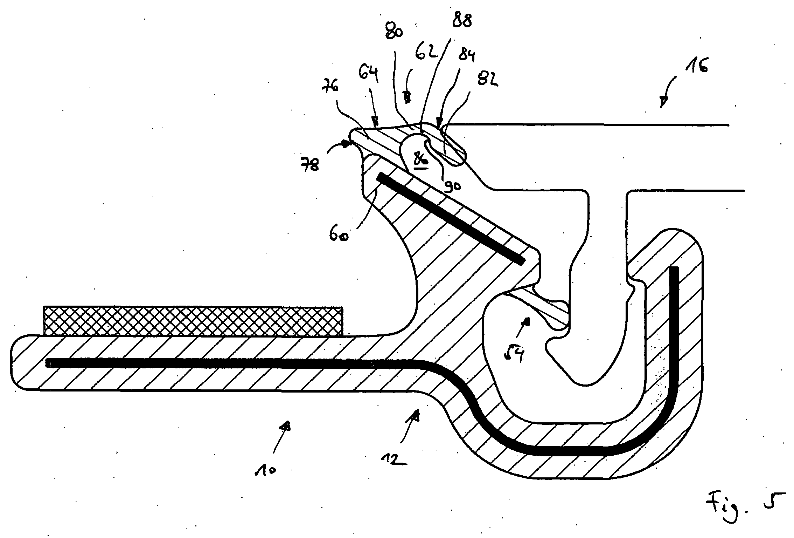

Nachfolgend werden Beispiele für unterschiedliche Geometrien des Dichtbereichs 62 beschrieben. Ein in Figur 5 dargestellter Dichtbereich 62 weist einen zu dem Dichtbereich 62 gemäß Figuren 1 bis 4 ähnlichen Aufbau auf. Jedoch ist der Freiraum 86 des Dichtbereichs 62 durch eine umfangsseitig offene Nut 88 begrenzt, welche einen Hinterschnitt 90 aufweist. Auf diese Weise kann eine besonders gute Bewegbarkeit des zweiten Teilabschnitts 82 relativ zu dem ersten Teilabschnitt 76 um den Verbindungsabschnitt 80 herum erreicht werden.

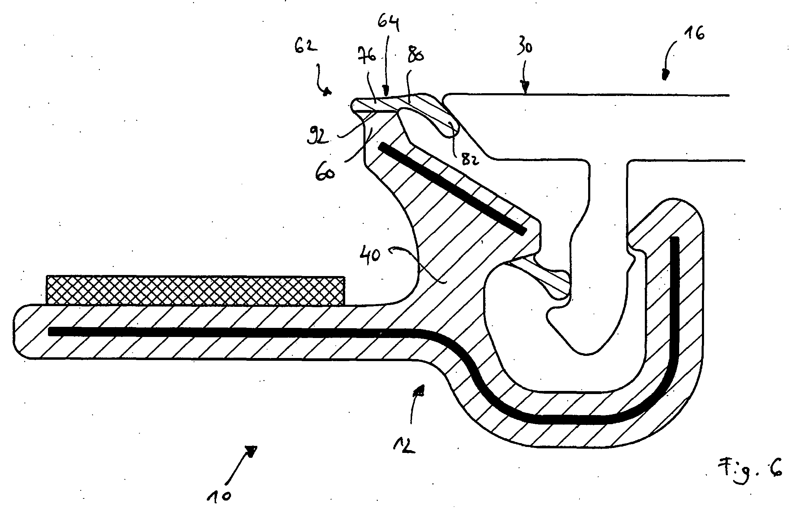

Ein in Figur 6 dargestellter Dichtbereich 62 weist einen abgeflachten ersten Teilabschnitt 76 auf, welcher sich im Wesentlichen parallel zu der Außenfläche 64 des Dichtbereichs 62 erstreckt. Eine dem Trägerabschnitt 60 zugewandte Begrenzung 92 des ersten Teilabschnitts 76 verläuft im Wesentlichen parallel zu der Außenseite 30 der Wasserkastenabdeckung 16 im fertig montierten Zustand der Wasserkastenabdeckung 16 an dem Profilelement 12. Dies hat den Vorteil, dass eine Druckbelastung des ersten Teilabschnitts 76 über die Begrenzung 92 in einfacher Weise auf den Trägerabschnitt 60 des Hauptkörpers 40 des Profilelements 12 abgeleitet werden kann.

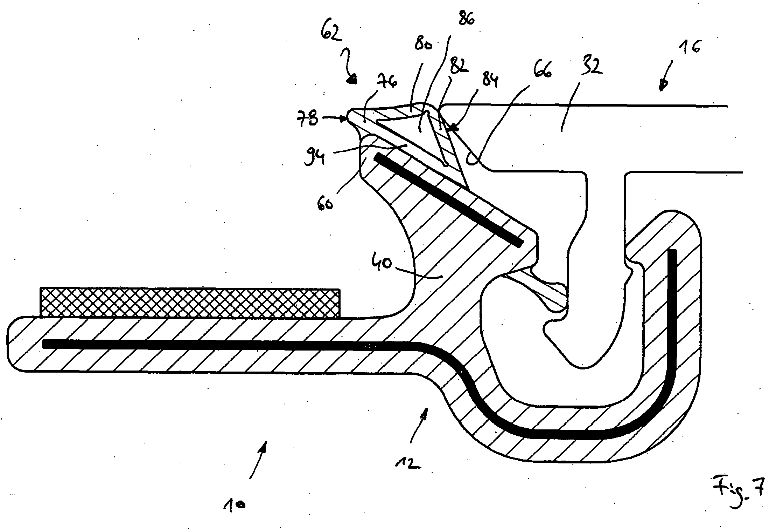

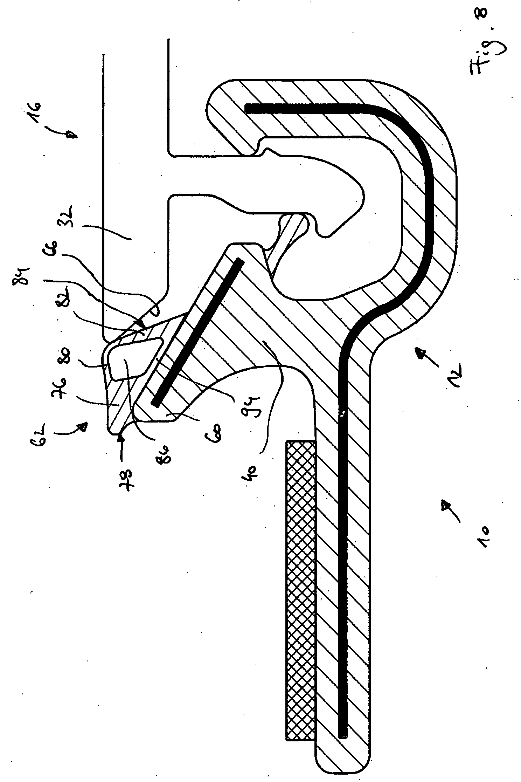

Bei den in Figuren 7 und 8 dargestellten Ausführungsformen sind Dichtbereiche 62 vorgesehen, welche Freiräume 86 aufweisen, die durch einen umfangsseitig geschlossenen Hohlraum begrenzt sind.

Die Verbindung zwischen dem ersten Teilabschnitt 76 und dem zweiten Teilabschnitt 82 auf der dem Verbindungsabschnitt 80 gegenüberliegenden Seite erfolgt mittels eines Zusatzabschnitts 94, welcher eine großflächige Verbindung mit dem Trägerabschnitt 60 des Hauptkörpers 40 ermöglicht.

Es ist möglich, dass die Begrenzungen des Hohlraums und die Außenflächen des Dichtbereichs 62 zumindest im Wesentlichen parallel zueinander verlaufen (vgl. Fig. 7). Es ist auch möglich, dass der Verlauf der Begrenzungen des Hohlraums und der Verlauf der Außenflächen des Dichtbereichs 62 voneinander unabhängig sind (vgl. Fig. 8).

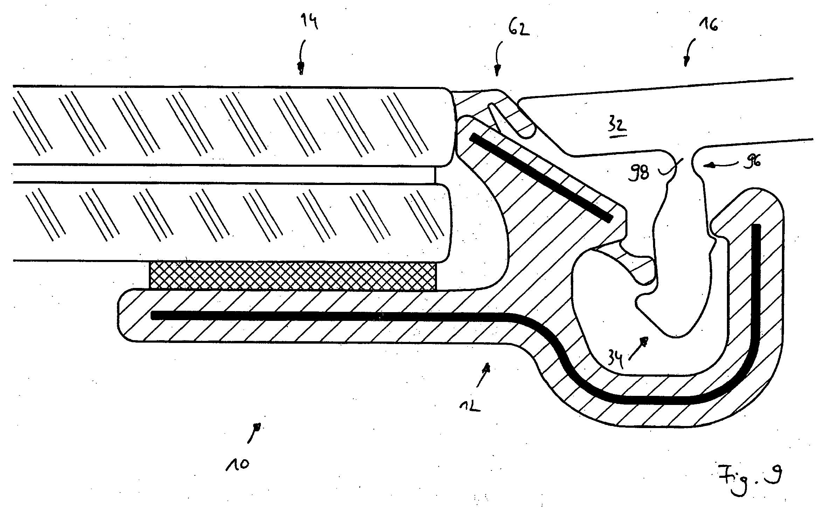

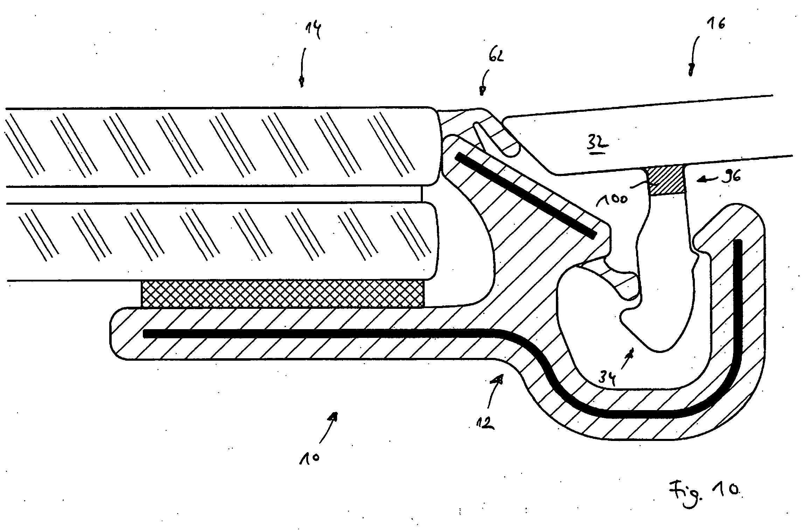

Die nachfolgend unter Bezugnahme auf die Figuren 9 und 10 beschriebenen Profilelementbaugruppen 10 sind bezüglich des Profilelements 12 und bezüglich der Fahrzeugscheibe 14 identisch zu der Profilelementbaugruppe 10 gemäß Figuren 1 und 2. Die Besonderheit der Profilelementbaugruppe 10 gemäß Figuren 9 und 10 besteht darin, dass der Rastkörper 34 der Wasserkastenabdeckung 32 in einem Anbindungsbereich 96 nicht starr mit dem Wasserkastenabschnitt 32 verbunden ist, sondern mittels eines verjüngten Anbindungsabschnitts 98 (vgl. Figur 9) bzw. mittels eines elastischen Anbindungsabschnitts 100 (vgl. Figur 10).

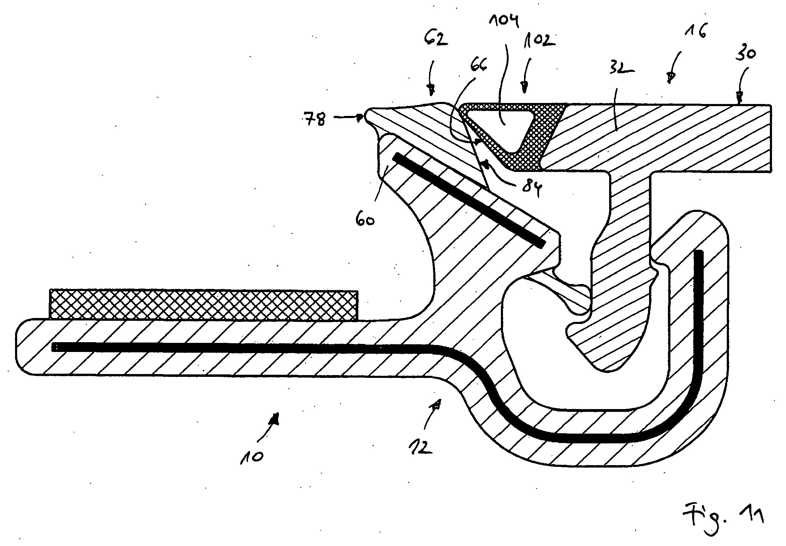

Eine in Figur 11 dargestellte Profilelementbaugruppe 10 umfasst einen Dichtbereich 62 mit einem in sich geschlossenen Querschnitt ohne voneinander separate Teilabschnitt, ohne Verbindungsabschnitt zur Verbindung der Teilabschnitte und ohne einen Freiraum, in welchen zumindest einer der Teilabschnitte hineinverformbar ist. Dieser Dichtbereich 62 weist eine zweite Dichtfläche 84 zur Anlage an eine Gegenfläche 66 der Wasserkastenabdeckung 16 auf. Die Gegenfläche 66 ist von einem elastisch verformbaren Zusatzabschnitt 102 des Wasserkastenabschnitts 32 gebildet. Der Zusatzabschnitt 102 ist insbesondere aus einem federelastischen Material hergestellt und umfasst bspw. einen Verformungsraum 104.

## Patentansprüche

1. Profilelement (12) zum Verbinden einer Fahrzeugscheibe (14) mit einem Abdeckteil (16), umfassend einen ersten Verbindungsbereich (42) zur Verbindung des Profilelements (12) mit der Fahrzeugscheibe (14), einen zweiten Verbindungsbereich (44) zur Verbindung des Profilelements (12) mit dem Abdeckteil (16) und einen Dichtbereich (62) zur dichtenden Anlage gegen die Fahrzeugscheibe (14) und gegen das Abdeckteil (16), wobei der Dichtbereich (62) eine Außenfläche (64) aufweist, welche im montierten Zustand des Profilelements (12) bündig oder zumindest im Wesentlichen bündig mit einer Außenseite (24) der Fahrzeugscheibe (14) und mit einer Außenseite (30) des Abdeckteils (16) angeordnet ist und wobei der Dichtbereich (62) mindestens zwei relativ zueinander bewegbare Teilabschnitte (76, 82) aufweist, wobei ein erster Teilabschnitt (76) eine erste Dichtfläche (78) zur Anlage gegen die Fahrzeugscheibe (14) und ein zweiter Teilabschnitt (82) eine zweite Dichtfläche (84) zur Anlage gegen das Abdeckteil (16) aufweist, wobei die Teilabschnitte (76, 82) auf der der Außenfläche (64) abgewandten Seite des Dichtbereichs (62) angeordnet sind, wobei der Dichtbereich (62) einen Freiraum (86) aufweist, in welchen zumindest einer der Teilabschnitte (76, 82) hineinverformbar ist, **dadurch gekennzeichnet, dass** der Freiraum (86) durch eine umfangsseitig offene Nut (88) begrenzt ist und die Nut (88) ausgehend von einem Nutgrund in einer von der Außenfläche (64) weg weisenden Richtung offen ist.

2. Profilelement (12) nach Anspruch 1, **dadurch gekennzeichnet, dass** die Teilabschnitte (76, 82) miteinander einstückig hergestellt sind.

3. Profilelement (12) nach einem der voranstehenden Ansprüche, **dadurch gekennzeichnet, dass** die Teilabschnitte (76, 82) mittels eines im Querschnitt verjüngten Verbindungsabschnitts (80) miteinander verbunden sind.

4. Profilelement (12) nach einem der voranstehenden Ansprüche, **dadurch gekennzeichnet, dass** der Dichtbereich (62) aus mindestens einem federelastischen Material hergestellt ist, sodass die Teilabschnitte (76, 82) von einem entspannten Ausgangszustand ausgehend durch Krafteinwirkung von außen relativ zueinander in einen Zwischenzustand überführbar sind und von dem Zwischenzustand ausgehend durch Wirken von Rückstellkräften des federelastischen Materials selbsttätig in Richtung Ausgangszustand zurückformbar sind.

5. Profilelement (12) nach einem der voranstehenden Ansprüche, **dadurch gekennzeichnet, dass** der zweite Verbindungsbereich (44) einen Rastbereich (50) zur Aufnahme eines Rastkörpers (34) des Abdeckteils (16) aufweist und dass innerhalb des Rastbereichs (50) ein Rastelement (54) angeordnet ist, das zur Verrastung des Rastkörpers (34) in dem Rastbereich (50) dient, wobei das Rastelement (54) sich entlang einer Rastelementebene (55) erstreckt, die in einem spitzen Winkel (59) zu einer Einführebene (57) zur Einführung des Rastkörpers (34) in den Rastbereich (50) orientiert ist, sodass das Rastelement (54) einen Widerhaken bildet.

6. Profilelementbaugruppe (10), **dadurch gekennzeichnet, dass** sie ein Profilelement (12) nach einem der voranstehenden Ansprüche umfasst, das mittels des ersten Verbindungsbereichs (42) mit einer Fahrzeugscheibe (14) verbunden ist, wobei der erste Teilabschnitt (76) des Dichtbereichs (62) mit der ersten Dichtfläche (78) an einer Stirnfläche (28) der Fahrzeugscheibe (14) anliegt und wobei der zweite Teilabschnitt (82) des Dichtbereichs (62) relativ zu dem ersten Teilabschnitt (76) bewegbar ist.

7. Profilelementbaugruppe (10) nach Anspruch 6, **dadurch gekennzeichnet, dass** das Profilelement (12) mittels des zweiten Verbindungsbereichs (44) mit einem Abdeckteil (16) verbunden ist, wobei der zweite Teilabschnitt (82) des Dichtbereichs (62) mit der zweiten Dichtfläche (84) an einer Gegenfläche (66) des Abdeckteils (16) anliegt.

## Claims

1. A profile element (12) for connecting a vehicle window pane (14) to a cover part (16), comprising a first connecting area (42) for connecting the profile element (12) to the vehicle window pane (14), a second connecting area (44) for connecting the profile element (12) to the cover part (16), and a sealing area (62) for placement against the vehicle window pane (14) and against the cover part (16) so as to create a seal, wherein the sealing area (62) has an outer surface (64) that, when the profile element (12) is in the mounted state, is arranged so as to be flush or at least essentially flush with the outside surface (24) of the vehicle window pane (14) and with the outside surface (30) of the cover part (16) and wherein the sealing area (62) has at least two segments (76, 82) that can move relative to each other, wherein the first segment (76) has a first sealing surface (78) for placement against the vehicle window pane (14), and the second segment (82) has a second sealing surface (84) for placement against the cover part (16), wherein the segments (76, 82) are arranged on the side of the sealing area (62) facing away from the outer surface (64), wherein the sealing area (62) has a free space (86) into which at least one of the segments (76, 82) can be deformed, **characterized in that** the free space (86) is delimited by a groove (88) that is open along the circumference and **in that** the groove (88), when starting from a ground of the groove (88), is open into a direction facing away from the outer surface (64).

2. The profile element (12) according to claim 1, **characterized in that** the segments (76, 82) are produced in one piece with each other.

3. The profile element (12) according to one of the preceding claims, **characterized in that** the segments (76, 82) are connected to each other by means of a connecting section (80) that has a narrowed cross section.

4. The profile element (12) according to one of the preceding claims, **characterized in that** the sealing area (62) is made of at least one resilient material, so that, by means of the application of force from the outside, the segments (76, 82) can be moved relative to each other from a relaxed initial state into an intermediate state, and so that, from the intermediate state, they can be autonomously restored back in the direction of their initial state due to the effect of the restoring forces of the resilient material.

5. The profile element (12) according to one of the preceding claims, **characterized in that** the second connecting area (44) has a latching area (50) to accommodate a latching member (34) of the cover part (16), and **in that**, within the latching area (50), there is a latching element (54) that serves to latch the latching member (34) in the latching area (50), wherein the latching element (54) extends along a latching element plane (55) that is oriented at an acute angle (59) relative to the insertion plane (57) for inserting the latching member (34) into the latching area (50), so that the latching element (54) forms a barb.

6. A profile element assembly (10), **characterized in that** it comprises a profile element (12) according to one of the preceding claims, that is connected to a vehicle window pane (14) by means of the first connecting area (42), wherein the first sealing surface (78) of the first segment (76) of the sealing area (62) is in contact with an end face (28) of the vehicle window pane (14) and wherein the second segment (82) of the sealing area (62) can move relative to the first segment (76).

7. The profile element assembly (10) according to claim 6, **characterized in that** the profile element (12) is connected to a cover part (16) by means of the second connecting area (44), wherein the second sealing surface (84) of the second segment (82) of the sealing area (62) is in contact with a counter-surface (66) of the cover part (16).

## Revendications

1. Elément profilé (12) pour relier une vitre de véhicule (14) à un élément de recouvrement (16), comprenant une première zone d'assemblage (42) destinée à relier l'élément profilé (12) à la vitre du véhicule (14), une seconde zone d'assemblage (44) destinée à relier l'élément profilé (12) à l'élément de recouvrement (16), et une zone d'étanchéité (62) destinée à venir en appui contre la vitre de véhicule (14) et l'élément de recouvrement (16), dans lequel la zone d'étanchéité (62) présente une surface extérieure (64) qui, dans l'état assemblé de l'élément profilé (12), est agencée en affleurement ou au moins sensiblement en affleurement avec un côté extérieur (24) de la vitre de véhicule (14) et avec un côté extérieur (30) de l'élément de recouvrement (16), et dans lequel la zone d'étanchéité (62) présente au moins deux tronçons partiels (76, 82) mobiles l'un par rapport à l'autre, dans lequel un premier tronçon partiel (76) présente une première surface d'étanchéité (78) destinée à venir en appui contre la vitre de véhicule (14), et un second tronçon partiel (82) présente une seconde surface d'étanchéité (84) destinée à venir en appui contre l'élément de recouvrement (16), dans lequel les tronçons partiels (76, 82) sont agencés sur le côté opposé à la surface extérieure (64) de la zone d'étanchéité (62), dans lequel la zone d'étanchéité (62) présente un espace libre (86), dans lequel au moins l'un des tronçons partiels (76, 82) peut être déformé vers l'intérieur, **caractérisé en ce que** l'espace libre (86) est délimité par une rainure périphérique ouverte (88), et la rainure (88) est ouverte en commençant d'une base de rainure dans une direction s'éloignant de la surface extérieure (64).

2. Elément profilé (12) selon la revendication 1, **caractérisé en ce que** les tronçons partiels (76, 82) sont réalisés en une seule pièce les uns avec les autres.

3. Elément profilé (12) selon l'une quelconque des revendications précédentes, **caractérisé en ce que** les tronçons partiels (76, 82) sont reliés entre eux au moyen d'un tronçon de liaison (80) de section transversale effilée.

4. Elément profilé (12) selon l'une quelconque des revendications précédentes, **caractérisées en ce que** la zone d'étanchéité (62) est constituée d'au moins un matériau élastique, de telle sorte que les tronçons partiels (76, 82) peuvent être transférés l'un par rapport à l'autre d'un état initial détendu à un état intermédiaire en appliquant une force extérieure, et peuvent être déformés en retour depuis l'état intermédiaire par l'action de forces de rappel du matériau élastique automatiquement dans la direction de l'état initial.

5. Elément profilé (12) selon l'une quelconque des revendications précédentes, **caractérisées en ce que** la deuxième zone d'assemblage (44) présente une zone d'encliquetage (50) destinée à recevoir un corps d'encliquetage (34) de l'élément de recouvrement (16), et **en ce qu'**à l'intérieur de la zone d'encliquetage (50) est disposé un élément d'encliquetage (54), qui sert pour l'encliquetage du corps d'encliquetage (34) dans la zone d'encliquetage (50), dans lequel l'élément d'encliquetage (54) s'étend le long d'un plan d'élément d'encliquetage (55) qui est orienté selon un angle aigu (59) par rapport à un plan d'insertion (57) pour introduire le corps d'encliquetage (34) dans la zone d'encliquetage (50), de sorte que l'élément d'encliquetage (54) forme un crochet.

6. Assemblage d'élément profilé (10), **caractérisé en ce qu'**il comprend un élément profilé (12) selon l'une des revendications précédentes, qui est relié au moyen de la première zone d'assemblage (42) à une vitre de véhicule (14), dans lequel le premier tronçon partiel (76) de la zone d'étanchéité (62), avec la première surface d'étanchéité (78), est en appui sur une surface d'extrémité (28) de la vitre de véhicule (14), et dans lequel le second tronçon partiel (82) de la zone d'étanchéité (62) est mobile par rapport au premier tronçon partiel (76).

7. Assemblage d'élément profilé (10) selon la revendication 6, **caractérisé en ce que** l'élément profilé (12) est relié à un élément de recouvrement (16) au moyen de la seconde zone d'assemblage (44), dans lequel le second tronçon partiel (82) de la zone d'étanchéité (62), avec la seconde surface d'étanchéité (84), vient en appui contre une contre-surface (66) de l'élément de recouvrement (16).
